# EUROPEAN PATENT APPLICATION

(11) **EP 4 806 834 A1**
(43) Date of publication of application: **16.09.2026**
(21) Application number: 24903050.3
(22) Date of filing: 05.11.2024
(51) Int. Cl.: B66F 9/075, G01S 17/00

(54) **FORKLIFT**

(30) Priority: 11.12.2023 CN 202323371848 U
(71) Applicant: Effito Pte. Ltd., Singapore 048545 (SG)
(72) Inventor: LU, Yujie, Singapore 048545 (SG); ZHANG, Weiliang, Singapore 048545 (SG); FANG, Mu, Singapore 048545 (SG); YANG, Bingchuan, Singapore 048545 (SG); LI, Zhilong, Singapore 048545 (SG)
(74) Representative: Bandpay & Greuter
(86) International application number: PCT/IB2024/060904
(87) International publication number: WO 2025/125933

(57) **Abstract**

The present disclosure provides a forklift, which includes a forklift body, a first 3D laser radar and a second 3D laser radar. The first 3D laser radar and the second 3D laser radar are respectively mounted on different mounting surfaces on a top of the forklift body, such that a scanning region of the first 3D laser radar is independent of or partially overlapped with a scanning region of the second 3D laser radar.

## Description

### CROSS REFERENCE TO RELATED APPLICATIONS

This application claims priority to Chinese Patent Application No. 202323371848.9 filed on December 11, 2023, the entire content of which is incorporated herein by reference.

### TECHNICAL FIELD

The embodiments of the present disclosure relate to the field of goods transportation technologies and in particular to a forklift.

### BACKGROUND

Forklift is an industrial vehicle for handling and stacking goods. It usually has a load fork which can be lifted or lowered to grasp and handle goods. With technological improvement of the forklift industry, smart forklifts, for example, Automated Guided Vehicle Forklift (AGV forklift), emerge gradually on the markets. The AGV forklift is a driverless forklift which can perform autonomous navigation and handling tasks by using built-in navigation systems and sensors. These forklifts can perform autonomous navigation and operations based on the preset path and task, without human operations.

### SUMMARY

One or more embodiments of the present disclosure provide a forklift, which includes a forklift body; a first three-dimensional (3D) laser radar and a second 3D laser radar. The first 3D laser radar and the second 3D laser radar are respectively mounted on different mounting surfaces on a top of the forklift body, such that a scanning region of the first 3D laser radar is independent of or partially overlapped with a scanning region of the second 3D laser radar.

### BRIEF DESCRIPTION OF DRAWINGS

One or more embodiments are illustrated by referring to the pictures in the drawings corresponding to these embodiments, and these illustrative descriptions do not constitute any limitation to the embodiments. The elements having same reference numerical signs in the drawings are represented as similar elements. Unless otherwise stated clearly, the pictures in the drawings do not constitute proportion limitation.
FIG. 1 is a first structural schematic diagram illustrating a forklift according to embodiments of the present disclosure.
FIG. 2 is a schematic diagram illustrating scanning regions of respective 3D laser radars of a forklift according to embodiments of the present disclosure.
FIG. 3 is a second structural schematic diagram illustrating a forklift according to embodiments of the present disclosure.
FIG. 4 is a third structural schematic diagram illustrating a forklift according to embodiments of the present disclosure.
FIG. 5 is an enlarged view of a part A in FIG. 3.
FIG. 6 is a structural schematic diagram illustrating mounting surfaces on a top of a forklift body according to embodiments of the present disclosure.

Numerals are described below:
100, forklift; 10, forklift body; 101, first side; 102, second side; 201, first 3D laser radar; 202, second 3D laser radar; 203, third 3D laser radar; 30, fork arm; 40, support assembly; 410, mounting platform; 411, first mounting surface; 4111, first edge portion; 4112, second edge portion; 412, second mounting surface; 4121, third edge portion; 4122, fourth edge portion; 420, upright column; 50, touch screen; 60, switching button; 70, tri-color alarm light; 80, emergency stop button; 90, manual charge interface; 110, automatic charge interface; 120, bottom obstacle avoidance laser radar; 130, in-place switch; 140, fork tip safety sensor; 150, manual control handle; 160, clearance lamp.

### DETAILED DESCRIPTION

In order to facilitate understanding of the present disclosure, the present disclosure will be described in more detail below with reference to the accompanying drawings and specific embodiments. It should be noted that, when an element is expressed as "connected" to another element, this element may be directly on another element or there is one or more intermediate element therebetween. The orientation or positional relationship indicated by the terms such as "up," "down," "left," "right," "upper end," "lower end," "top," and "bottom" and the like, used in the present disclosure is based on the orientation or positional relationship indicated in the drawings and is used only for convenience and simplification of descriptions of the present disclosure, rather than indicating or implying that the indicated apparatus or element shall have a specific orientation, and be configured or operated in a specific orientation. Thus, the terms shall not be understood as limiting of the present disclosure. Furthermore, the terms "first" and "second" are used only for the purpose of descriptions and shall not be understood as indicating or implying any relative importance.

Unless otherwise defined, all technical and scientific terms used in the present disclosure shall have the same meanings as those skilled in the arts can usually understand. The terms used in the present disclosure is used only for describing specific embodiments rather than limiting the present disclosure.

An AGV forklift is usually provided with various sensors, such as laser radars, and hence can sense surrounding environment by using the laser radars to avoid colliding with obstacles, and accurately carry out positioning and navigation. At present, the forklift is provided with single 3D laser radar with limited point cloud scanning region and scanning density, and therefore its positioning accuracy and stereoscopic protection can be further improved significantly.

An embodiment of the present disclosure provides a forklift for which an environment sensing system and the like are further optimized to enable the forklift to better sense the surrounding environment and improve its positioning function and stereoscopic protection function and so on.

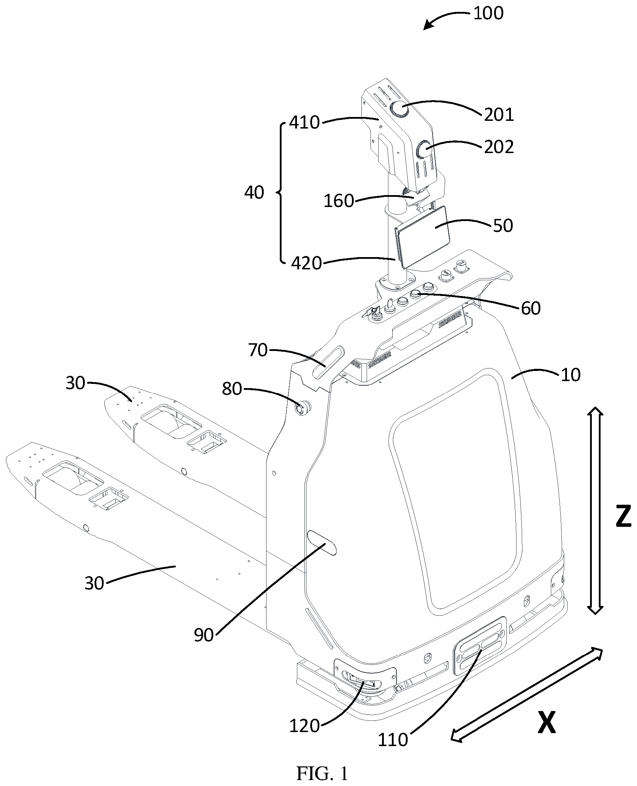

With reference to FIG. 1, in an embodiment of the present disclosure, the forklift 100 includes a forklift body 10, a first three-dimensional (3D) laser radar 201, and a second 3D laser radar 202, where the first 3D laser radar 201 and the second 3D laser radar 202 are used to scan a surrounding environment region of the forklift body 10. The first 3D laser radar 201 and the second 3D laser radar 202 are respectively mounted on different mounting surfaces on a top of the forklift body 10, such that a scanning region of the first 3D laser radar 201 is independent of or partially overlapped with a scanning region of the second 3D laser radar 202.

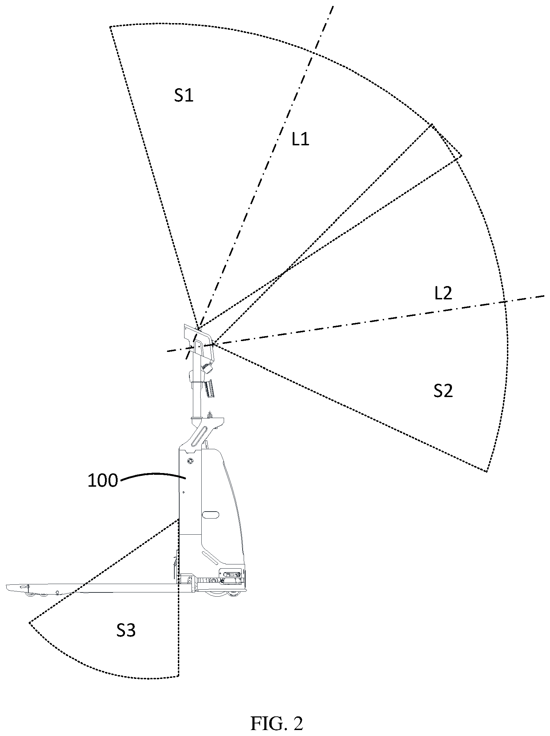

With reference to FIG. 2, it shows the scanning region S1 of the first 3D laser radar 201 and the scanning region S2 of the second 3D laser radar 202. Illustratively, the scanning region S1 of the first 3D laser radar 201 is partially overlapped with the scanning region S2 of the second 3D laser radar 202. In this embodiment, the scanning region of the 3D laser radar herein includes a boundary region where the farther from the 3D laser radar, the larger projection plane is along the laser projection path; an angle range involved in the scanning region of the 3D laser radar is related to parameters of the 3D laser radar, for example, the scanning angle range may be 1° to 180°.

In this embodiment, the working principle of the forklift 100 is as follows: the first 3D laser radar 201 and the second 3D laser radar are on the top of the forklift body 10, and are respectively mounted on different mounting surfaces; in this way, the scanning region of the first 3D laser radar 201 is independent of or partially overlapped with the scanning region of the second 3D laser radar 202, such that the forklift 100 can obtain more point cloud data by the first 3D laser radar 201 and the second 3D laser radar 202, and perform positioning and stereoscopic protection and so on based on the point cloud data.

It can be understood that the forklift 100 in this embodiment can obtain more view angles and scanning data by using the first 3D laser radar 201 and the second 3D laser radar 202, so as to more fully and accurately sense the surrounding environment of the forklift 100. In this embodiment, the fusion of the point cloud data of the two 3D laser radars can eliminate the measurement errors and blind areas of the single 3D laser radar, and hence improve the accuracy of forklift position and pose estimation, therefore, the positioning accuracy can satisfy higher requirements, while the stereoscopic protection capability can be improved accordingly.

Furthermore, since the first 3D laser radar 201 and the second 3D laser radar 202 are at different positions of the forklift 100, more comprehensive environmental information can be obtained, and the forklift positioning error can be reduced. The data of the two 3D laser radars can be mutually supplemented to provide more accurate map establishing and path planning, thereby realizing more accurate positioning and navigation.

In this embodiment, the forklift body 10 includes a vehicle body of the forklift 100 and further includes a control module, a power supply module, a power mechanism, and a communication module and the like. The control module includes a controller and a driver. The controller is in charge of entire movement control and task scheduling of the forklift 100, and performs, by driving the power mechanism using the driver, corresponding operations such as forklift travel, lift of fork arm 30 and the like. In this embodiment, the point cloud data is generated by the 3D laser radars, and the controller plans a travel path of the forklift 100 based on the point cloud data, and enables the forklift 100 to travel along the travel path by driving the power mechanism using the driver. The power supply module includes a battery pack and related circuits to supply power to respective power-consuming modules of the forklift 100. The power mechanism includes a hydraulic mechanism for lifting goods and an electromotor for driving a wheel group to run, and the like. The communication module is configured to perform data interaction and instruction transmission with other devices or systems. The communication module may be a wireless communication module, such as Wi-Fi module, Bluetooth module or the like, and may also be a wired communication module, such as Ethernet, CAN bus and the like.

In other embodiments, the number of the 3D laser radars on the top of the forklift 100 is not limited to two, and a corresponding number of 3D laser radars can be disposed based on actual requirements to scan corresponding regions.

In some embodiments, the first 3D laser radar 201 and the second 3D laser radar 202 may use same specification parameters or different specification parameters, where the specification parameters include measurement range, angle resolution, view angle, data point density, measurement accuracy and scanning speed and the like. It can be understood that the use of the same specification parameters can enable the point cloud data of the first 3D laser radar 201 and the point cloud data of the second 3D laser radar 202 to be consistent, helping fusion processing of the point cloud data of the two 3D laser radars, whereas the combination of the 3D laser radars using different specification parameters helps save costs while satisfying the actual requirements.

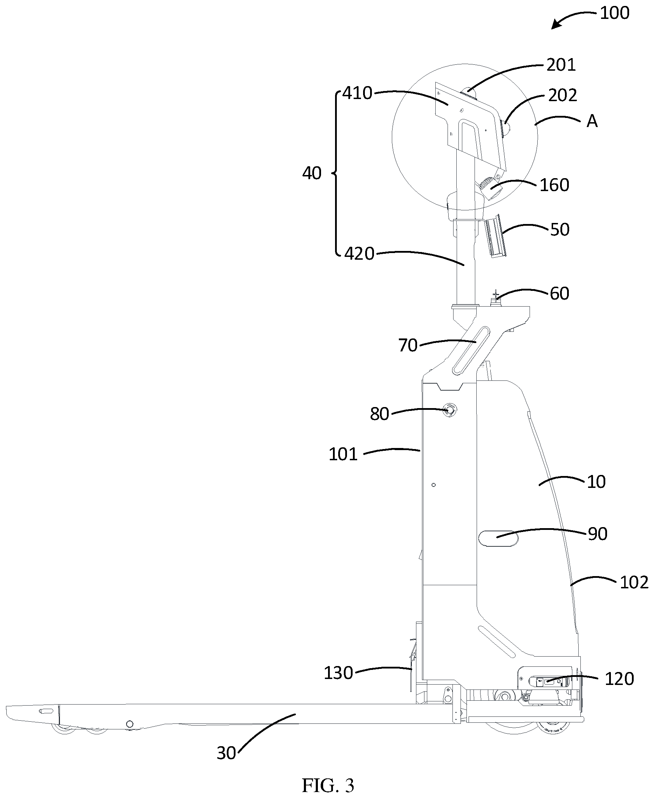

With reference to FIG. 3, in some embodiments, the forklift body 10 includes a first side 101 and a second side 102 that are opposite with each other. The forklift 100 further includes fork arms 30 which are connected to the forklift body 10 and at the first side 101. The scanning region of the first 3D laser radar 201 includes a front obliquely-upper region of the second side 102, and the scanning region of the second 3D laser radar 202 includes a front region of the second side 102.

In this embodiment, the first side 101 and the second side 102 are two sides that are opposite with each other on the forklift body 10. The first side 101 of the forklift body 10 is connected with the fork arms 30, and when traveling with goods, the forklift 100 travels along a direction ahead of the second side 102. Therefore, in this embodiment, the first 3D laser radar 201 and the second 3D laser radar 202 are mounted on the top of the forklift body 10, the scanning region of the first 3D laser radar includes the front obliquely-upper region of the second side 102, and the scanning region of the second 3D laser radar includes the front region of the second side 102, in this way, the coverage scope of the point cloud can be expanded to remedy the scanning blind area of single 3D laser radar, and thus the forklift 100 can, when traveling with goods, perform itself positioning and sense its front environment, realizing stereoscopic protection without blind area for the front upper and middle regions of the forklift body 10.

In some embodiments, the present disclosure further provides a moving method of a forklift, which is applied to the above forklift 100. The method includes the following: when the forklift 100 implements the positioning function, the forklift 100 at least uses the point cloud data scanned by the first 3D laser radar 201 as main determination basis, and the point cloud data scanned by the second 3D laser radar 202 as supplementation; and/or, when the forklift 100 implements the stereoscopic protection function, the forklift 100 at least uses the point cloud data scanned by the second 3D laser radar 202 as main determination basis and the point cloud data scanned by the first 3D laser radar 201 as supplementation. In other embodiments, when the forklift 100 implements the positioning function, the forklift 100 at least uses the point cloud data scanned by the first 3D laser radar 201 as determination basis; in some other embodiments, the forklift 100 uses the point cloud data scanned by the first 3D laser radar 201 and the second 3D laser radar 202 as determination basis; and/or, when the forklift 100 implements the stereoscopic protection function, the forklift 100 at least uses the point cloud data scanned by the second 3D laser radar 202 as determination basis; in some other embodiments, the forklift 100 uses the point cloud data scanned by the first 3D laser radar 201 and the second 3D laser radar 202 as determination basis.

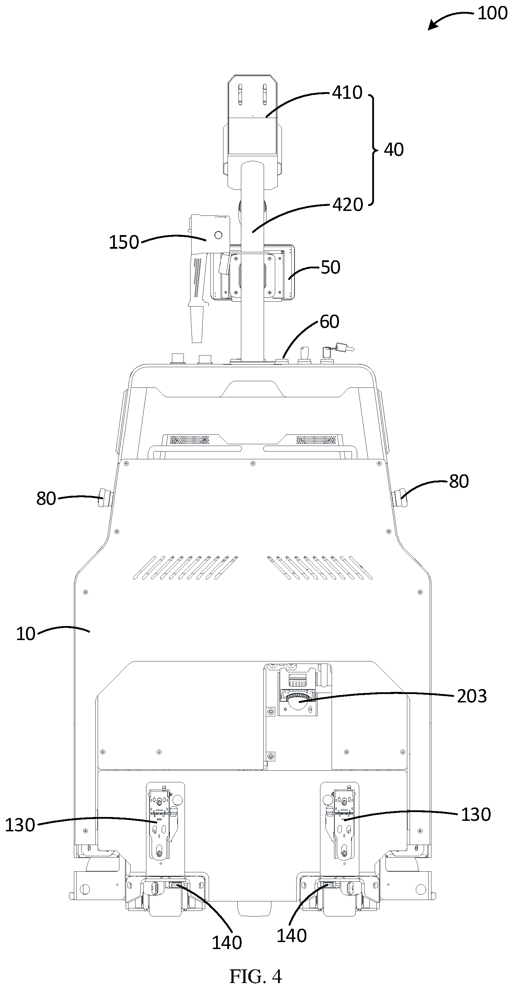

With reference to FIG. 4, in some embodiments, the forklift 100 further includes a third 3D laser radar 203 at a middle position of a vertical direction Z of the forklift body 10 and mounted on the first side 101 of the forklift body 10. A scanning region of the third 3D laser radar 203 includes a front obliquely-lower region of the first side 101. In other embodiments, when the forklift 100 implements the positioning function, the forklift 100 uses the point cloud data scanned by the first 3D laser radar 201, the second 3D laser radar 202 and the third 3D laser radar 203 as determination basis; and/or, when the forklift 100 implements the stereoscopic protection function, the forklift 100 uses the point cloud data scanned by the first 3D laser radar 201, the second 3D laser radar 202 and the third 3D laser radar 203 as determination basis.

With continuous reference to FIG. 2, it further shows the scanning region S3 of the third 3D laser radar 203, and the scanning region S3 covers the front obliquely-lower region of the first side 101 and covers all or part of the fork arms 30.

In some embodiments, the present disclosure further provides a handling method of a forklift, which is applied to the above forklift 100. The method includes the following: the forklift 100 travels along a direction ahead of the first side 101 of the forklift 100 for goods taking and picks up a pallet using the fork arms 30 at the first side 101 of the forklift 100; the forklift 100 obtains the point cloud data by the third 3D laser radar 203 at the first side 101 of the forklift body 10 to determine a state of the fork arms 30, a state of the pallet and a state of the goods on the pallet, and provide feedback to adjust the forklift 100; the forklift 100 runs away along a direction ahead of the second side 102 of the forklift 100, and based on the point cloud data obtained by the first 3D laser radar, the second 3D laser radar and the third 3D laser radar, adjusts the travel path of the forklift 100. The first side is opposite to the second side. Providing feedback to adjust the forklift 100 includes: based on the point cloud data obtained by the third 3D laser radar 203, determining whether the fork arms 30 are in place for the pallet; when, based on the point cloud data obtained by the third 3D laser radar 203, determining that the pallet or goods is abnormal, providing feedback, stopping the travel of the forklift 100, and adjusting poses of the fork arms 30. In some embodiments, in this embodiment, when picking up goods, the forklift 100 travels along the direction ahead of the first side 101 to pick up a pallet using the fork arms 30. The forklift 100 can obtain the point cloud data by the third 3D laser radar 203 to sense the front obliquely-lower region of the first side 101 (region where the fork arms 30 are located), and based on the point cloud data obtained by the third 3D laser radar 203, determine whether the fork arms 30 are in place for the pallet, and meanwhile monitor a state of goods on the pallet. When monitoring an anomaly occurring to the pallet or goods, the forklift 100 stops traveling, adjusts the poses of the fork arms 30 in time and provides feedback and alarm and so on. Furthermore, when the forklift 100 travels along the direction ahead of the second side 102, the third 3D laser radar 203 can sense an environment in the front obliquely-lower region of the first side 101 and obtain the point cloud data, and then send the point cloud data to the control module, such that the control module can perform operations, such as path adjustment and the like based on the point cloud data.

With continuous reference to FIG. 1, in some embodiments, the first 3D laser radar 201 and the second 3D laser radar 202 are aligned with each other in a width direction X of the forklift body 10.

It can be understood that, when the first 3D laser radar 201 and the second 3D laser radar 202 have different scanning directions, a distance between the first 3D laser radar 201 and the second 3D laser radar 202 in the width direction X of the forklift body 10 can be reduced to help mutual calibration and mutual supplementation at the time of fusion of the point cloud data of the first 3D laser radar 201 and the second 3D laser radar 202, so as to improve the accuracy of the position and pose estimation of the forklift 100. In some embodiments, when the first 3D laser radar 201 and the second 3D laser radar 202 are aligned with each other (or the lateral distance therebetween is zero) in the width direction X of the forklift body 10, coordinate alignment operation of the two 3D laser radars can be performed easily, optimizing the operation process of the point cloud data fusion.

With continuous reference to FIG. 1, in some embodiments, the first 3D laser radar 201 and the second 3D laser radar 202 are both at the middle position of the forklift body 10 in the width direction X.

It can be understood that, when the forklift 100 uses single 3D laser radar, the 3D laser radar is usually at a side of the top of the forklift 100 and hung with an overlooking pose above the forklift 100, such that the scanning region of the 3D laser radar can cover the forklift body 10, the fork arms 30 and the surrounding environment of the forklift 100, so as to realize sensing, positioning and safety protection of the forklift 100. However, the scanning region of the 3D laser radar is finally projected onto the ground, and thus the scanning region acting on the surrounding environment of the forklift 100 is relatively smaller, and the obtained point cloud data is relatively less. In this embodiment, the first 3D laser radar 201 and the second 3D laser radar 202 are at the middle position of the forklift body 10 in the width direction X, and their scanning regions respectively include the front obliquely-upper region and the front region of the second side 102. Therefore, the scanning regions of the first 3D laser radar 201 and the second 3D laser radar 202 are only limited by the measurement range and the view angle of the 3D laser radars, that is, the scanning regions of the first 3D laser radar 201 and the second 3D laser radar 202 are wider and farther. In this case, the scanning region acting on the surrounding environment of the forklift 100 is increased and more point cloud data can be obtained accordingly. Furthermore, the front obliquely-lower region of the first side 101 (region where the fork arms 30 are located) is scanned by the third 3D laser radar 203, which also improves the sensing, positioning and safety protection capabilities of the forklift 100.

In addition, in this embodiment, the disposal of the first 3D laser radar 201 and the second 3D laser radar 202 at the middle position of the forklift body 10 in the width direction X can reduce a size difference of the environment regions sensed by the forklift 100 at left and right sides of the travel direction, helping the forklift 100 to plan the travel path based on the fused point cloud data. Illustratively, the first 3D laser radar 201 and the second 3D laser radar 202 are both centered on the forklift body 10 in the width direction X.

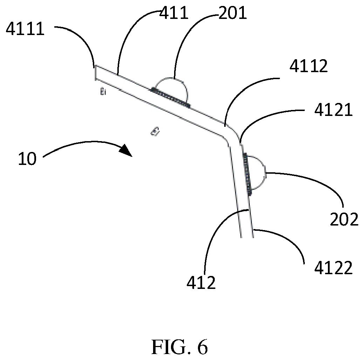

In some embodiments, as shown in FIG. 6, the top of the forklift body 10 includes a first mounting surface 411 and a second mounting surface 412. The first mounting surface 411 is on a top surface of the forklift body 10, and the second mounting surface 412 is at the second side 102 of the forklift body 10. The first 3D laser radar 201 is mounted on the first mounting surface 411 and the second 3D laser radar 202 is mounted on the second mounting surface 412, respectively. Furthermore, with reference to FIG. 1, FIG. 3 and FIG. 5, in some embodiments, the forklift 100 further includes a support assembly 40 on the top of the forklift body 10, and the first 3D laser radar 201 and the second 3D laser radar 202 are respectively mounted on different mounting surfaces of the support assembly 40.

It can be understood that, in this embodiment, the first 3D laser radar 201 and the second 3D laser radar 202 are above the forklift body 10 through the support assembly 40, avoiding from the blocking of the forklift body 10 and reducing the scanning blind area.

Illustratively, the support assembly 40 includes an upright column 420 and a mounting platform 410. The upright column 420 is on the top of the forklift body 10 and fixedly connected with the forklift body 10. The upright column 420 is connected with the mounting platform 410, and in some embodiments, the upright column 420 is detachably connected with the mounting platform 410. The first 3D laser radar 201 and the second 3D laser radar 202 are respectively mounted on different mounting surfaces on the mounting platform 410. In some embodiments, the mounting platform 410 can be movable relative to the upright column 420 in a vertical direction Z. In this embodiment, the mounting platform 410 is fixedly connected to a top of the upright column 420. Since the mounting platform 410 can be movable relative to the upright column 420 in the vertical direction Z, the forklift provided with the mounting platform 410 and the upright column 420 can be easy to travel through a low region, thereby increasing the application scope of the forklift.

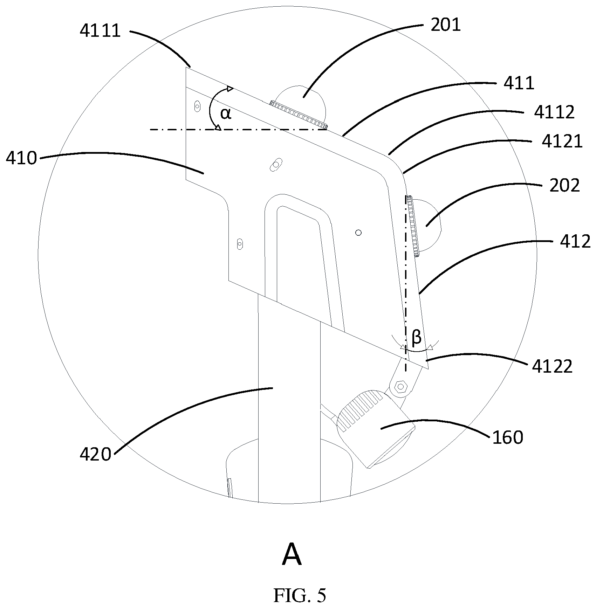

With reference to FIG. 5, in some embodiments, the mounting platform 410 of the support assembly 40 includes the first mounting surface 411 and the second mounting surface 412; the first 3D laser radar 201 is mounted on the first mounting surface 411 and the second 3D laser radar 202 is mounted on the second mounting surface 412.

The first mounting surface 411 and the second mounting surface 412 on the top of the forklift body 10 may be two surfaces connected with each other or not adjacent to each other.

With continuous reference to FIG. 5 and FIG. 6, in some embodiments, a ball head of the first 3D laser radar 201 is on the first mounting surface 411, and a central axis of the ball head of the first 3D laser radar 201 is perpendicular to the first mounting surface 411; a ball head of the second 3D laser radar 202 is on the second mounting surface 412, and a central axis of the ball head of the second 3D laser radar 202 is perpendicular to the second mounting surface 412.

It can be understood that a sensing module of the 3D laser radars in this embodiment is a ball-shaped structure, in which a laser transmitter and a laser receiver and the like are disposed to realize omnidirectional scanning. Furthermore, in this embodiment, the central axes of the respective ball heads of the first 3D laser radar 201 and the second 3D laser radar 202 are perpendicular to corresponding mounting surfaces, such that the field-of-view central axis L1 of the first 3D laser radar 201 is perpendicular to the first mounting surface 411, and the field-of-view central axis L2 of the second 3D laser radar 202 is perpendicular to the second mounting surface 412. In this case, the 3D laser radars on the corresponding mounting surfaces can perform uniform scanning on the surrounding environment, thereby reducing the scanning blind area. Moreover, the determined design angle information of the mounting surfaces can be directly applied to calculation of an azimuth angle for positioning of the forklift 100 and positioning of a target obstacle, so as to reduce complex data conversion.

In some embodiments, an included angle α between the first 3D laser radar 201 and a horizontal plane is formed, and the included angle α ranges from 0° to 25°; and/or, an included angle β between the second 3D laser radar 202 and a vertical plane is formed, and the included angle β ranges from 0° to 15°.

It can be understood that, in some special terrains or environments, it is possibly required to mount the 3D laser radars at a tilt angle, so as to better sense surrounding obstacles or terrain changes. In this embodiment, mounting angle ranges of the first 3D laser radar 201 and the second 3D laser radar 202 are respectively provided to enable the forklift 100 to adapt to different terrains or environments.

In some embodiments, the included angle between the first 3D laser radar 201 and the horizontal plane and the included angle between the second 3D laser radar 202 and the vertical plane are both fixed. The mounting angle between the first 3D laser radar 201 and the horizontal plane is configured as 24° and the mounting angle between the second 3D laser radar 202 and the vertical plane is configured as 7°.

In some other embodiments, the included angle between the first 3D laser radar 201 and the horizontal plane and the included angle between the second 3D laser radar 202 and the vertical plane are both adjustable. Illustratively, in one manner, the first 3D laser radar 201 and the second 3D laser radar 202 are both movably mounted on the top of the forklift body 10, by adjusting the angles of the first 3D laser radar 201 and the second 3D laser radar 202 relative to the forklift body 10, the included angle between the first 3D laser radar 201 and the horizontal plane and the included angle between the second 3D laser radar 202 and the vertical plane can be both adjustable . In some embodiments, the first 3D laser radar 201 and the second 3D laser radar 202 can both be movably mounted on the mounting platform 410. In another manner, the first mounting surface 411 and the second mounting surface 412 on the top (e.g. the mounting platform 410) of the forklift body 10 can both be movable mounting surfaces, and the scanning regions of the first 3D laser radar 201 and the second 3D laser radar 202 can be adjusted by adjusting the angles of the first mounting surface 411 and the second mounting surface 412 respectively.

With continuous reference to FIG. 5 and FIG. 6, in some embodiments, the first mounting surface 411 and the second mounting surface 412 are two surfaces connected with each other. The first mounting surface 411 includes a first edge portion 4111 and a second edge portion 4112 that are opposite with each other, and the second mounting surface 412 includes a third edge portion 4121 and a fourth edge portion 4122 that are opposite with each other. The second edge portion 4112 is adjacent to the third edge portion 4121. The first edge portion 4111, the second edge portion 4112, the third edge portion 4121 and the fourth edge portion 4122 are all parallel to the width direction X of the forklift body 10.

In some embodiments, the mounting surface 411 is a horizontal mounting surface. In some other embodiments, the first mounting surface 411 is a tilt surface tilting from the first edge portion 4111 to the second edge portion 4112, and the first edge portion 4111 is higher than the second edge portion 4112. Further, the second edge portion 4112 is closer to the second side 102 of the forklift body 10 than the first edge portion 4111. In this case, the field-of-view central axis L1 of the first 3D laser radar 201 faces toward the front obliquely-upper region of the second side 102 of the forklift body 10, such that the scanning region of the first 3D laser radar 201 can include the front obliquely-upper region of the second side 102.

In some embodiments, the second mounting surface 412 is a vertical mounting surface. In some other embodiments, the second mounting surface 412 is a tilt surface tilting from the third edge portion 4121 to the fourth edge portion 4122, and the third edge portion 4121 is higher than the fourth edge portion 4122. Further, the fourth edge portion 4122 is closer to the second side 102 of the forklift body 10 than the third edge portion 4121. In this case, the field-of-view central axis L1 of the first 3D laser radar 201 intersects with the field-of-view central axis L2 of the second 3D laser radar 202, and an overlapped portion between the scanning region of the second 3D laser radar 202 and the scanning region of the first 3D laser radar 201 is increased, thereby benefiting the fusion of the point cloud data of the two 3D laser radars.

With reference to FIG. 1, FIG. 3 and FIG. 4, in some embodiments, the forklift 100 further includes a manual control handle 150, a touch screen 50, a tri-color alarm light 70, an emergency stop button 80, a voice broadcaster, an automatic charge interface 110, a clearance lamp 160, a switching button 60, a manual charge interface 90, a bottom obstacle avoidance laser radar 120, an in-place switch 130, and a fork tip safety sensor 140, and the like.

In this embodiment, the upright column 420 is provided with a fixing structure by which the manual control handle 150 can be taken from or placed on the upright column 420. The manual control handle 150 is electrically connected with the control module of the forklift body 10. The operator can drive the forklift 100 by using the manual control handle 150. The touch screen 50 is mounted on the upright column 420 and is electrically connected with the controller of the forklift body 10. The touch screen 50 is installed with software and system for human-machine interaction. The operator can perform parameter setting on the forklift 100, and view a working log of the forklift 100 and so on through the touch screen 50. The tri-color alarm light 70 is on the vehicle body of the forklift body 10 and electrically connected with the control module, so as to represent the state of the forklift 100 by light colors. For example, the tri-color alarm light 70 displays green light to indicate normal operation of the forklift 100, displays orange light to indicate the emergency state of the forklift 100, and displays red light to indicate the failure of the forklift 100. The emergency stop button 80 is on the vehicle body of the forklift body 10 and electrically connected with the control module. The operator can bring the forklift 100 to an emergency stop by triggering the emergency stop button 80.

The voice broadcaster is mounted inside the forklift body 10 and electrically connected with the control module to provide voice alarm and broadcast operation information (e.g., "forward," "backward," and "turn around") and the like. The automatic charge interface 110 is at the bottom of the second side 102 of the forklift body 10 and connected with the power supply module to connect the forklift 100 to a charge equipment. Illustratively, when the battery level of the forklift 100 is lower than a threshold, the forklift 100 returns to the charge station and connects with the charge equipment via the automatic charge interface 110, so as to start a charge process. After charge completion, the forklift 100 may automatically disconnect with the charge equipment to return to work. In some embodiments, the manual charge interface 90 is on the vehicle body of the forklift 100 and connected with the power supply module. The operator can connect the forklift 100 to the charge equipment by manual connection. The clearance lamp 160 is configured to display the outline of the forklift 100 to remind people around the forklift 100 to stay away from the forklift 100, so as to realize safety protection. In this embodiment, the clearance lamp 160 is mounted on the mounting platform 410. The switching button 60 is on the top of the forklift body 10 and electrically connected with the control module. The operator can distribute an instruction to the control module by triggering the switching button 60 to start the forklift 100 or enable the forklift 100 to perform corresponding operation.

The bottom obstacle avoidance laser radar 120 is at the bottom of the forklift body 10. The bottom obstacle avoidance laser radar 120 may be a 2D laser radar, which is connected with the control module, to sense the surrounding environment of the bottom of the forklift body 10, so as to reduce the scanning blind area around the forklift 100, realizing the stereoscopic protection without scanning blind area for the front lower and middle regions of the forklift body 10. The in-place switch 130 is at the bottom of the first side 101 and used in cooperation with the fork arms 30 to detect whether a pallet is in place at the time of picking up the pallet. Illustratively, the in-place switch 130 includes a contact sensor connected with the control module, and the contact sensor sends an in-place signal to the control module upon contacting with the pallet to enable the control module to determine that the pallet is in place. A fork arm 30 includes a picking end and a fixed end. The fixed end is at the first side 101 of the forklift body 10 and connected with the forklift body 10, and the picking end is configured to pick up the pallet. A fork tip safety sensor 140 is at a picking end of a fork arm 30 and is configured to monitor the environment ahead of the fork arm 30. Illustratively, the fork tip safety sensor 140 includes a 2D laser radar connected with the control module, and the 2D laser radar senses the environment ahead of the fork arm 30 and generates point cloud data and then sends the point cloud data to the control module. Thus, the control module, based on the point cloud data, plans the travel path of the forklift 100 and controls the fork arm 30 to pick up the pallet, and so on.

Finally, it should be understood that the above embodiments are used only to illustrate the technical solutions of the present disclosure rather than to limit the present disclosure. Based on the idea of the present disclosure, the above embodiments or the technical features of different embodiments can be mutually combined, and the steps can be performed in any sequence. Furthermore, many other changes of different aspects of the present disclosure may be present as shown above. For purpose of clarity, they are not mentioned in details. Although detailed descriptions are made to the present disclosure by referring to the preceding embodiments, those skilled in the art should understand that any person of this prior art may still make modifications to the technical solutions recorded in the above embodiments or make equivalent substitutions to part or all of technical features therein. Such modifications or substitutions will not cause the corresponding technical solutions to depart from the scope of the technical solutions of the embodiments of the present disclosure.

## Claims

1. A forklift, comprising:
a forklift body; and
a first three-dimensional (3D) laser radar and a second 3D laser radar,
wherein the first 3D laser radar and the second 3D laser radar are respectively mounted on different mounting surfaces on a top of the forklift body, such that a scanning region of the first 3D laser radar is independent of or partially overlapped with a scanning region of the second 3D laser radar.

2. The forklift of claim 1, further comprising fork arms, wherein the fork arms are connected with the forklift body and at a first side of the forklift body;
the scanning region of the first 3D laser radar comprises a front obliquely-upper region of a second side of the forklift body, wherein the second side of the forklift body and the first side of the forklift body are opposite to each other; and
the scanning region of the second 3D laser radar comprises a front region of the second side of the forklift body.

3. The forklift of claim 1 or 2, further comprising a third 3D laser radar,
wherein the third 3D laser radar is mounted on a first side of the forklift body, a scanning region of the third 3D laser radar includes a front obliquely-lower region of the first side, and the first side is a side of the forklift body connected with the fork arms of the forklift.

4. The forklift of any one of claims 1 to 3, wherein the first 3D laser radar and the second 3D laser radar are aligned with each other in a width direction of the forklift body.

5. The forklift of any one of claims 1 to 4, further comprising a support assembly, wherein
the support assembly is on the top of the forklift body; and
the first 3D laser radar and the second 3D laser radar are respectively mounted on different mounting surfaces of the support assembly.

6. The forklift of any one of claims 1 to 4, wherein the top of the forklift body comprises a first mounting surface and a second mounting surface;
a ball head of the first 3D laser radar is on the first mounting surface, and a central axis of the ball head of the first 3D laser radar is perpendicular to the first mounting surface; and
a ball head of the second 3D laser radar is disposed on the second mounting surface, and a central axis of the ball head of the second 3D laser radar is perpendicular to the second mounting surface.

7. The forklift of any one of claims 1 to 6, further comprising a controller and a driver;
wherein the controller is used for movement control, task scheduling and travel path planning of the forklift; and
the driver is configured to drive a power mechanism of the forklift to perform a corresponding operation.

8. The forklift of any one of claims 1 to 7, further comprising an upright column and a mounting platform, wherein the upright column is on the top of the forklift body, the mounting platform is connected with a top end of the upright column, and the mounting platform is vertically movable relative to the upright column; and wherein the first 3D laser radar and the second 3D laser radar are respectively mounted on different mounting surfaces of the mounting platform.

9. The forklift of any one of claims 1 to 8, wherein the first 3D laser radar and the second 3D laser radar are both movably mounted on the top of the forklift body.

10. The forklift of any one of claims 1 to 9, wherein an included angle between the first 3D laser radar and a horizontal plane is formed, and ranges from 0° to 25°.

11. The forklift of any one of claims 1 to 10, wherein an included angle between the second 3D laser radar and a vertical plane is formed, and ranges from 0° to 15°.

12. The forklift of any one of claims 1 to 11, further comprising at least one of: a manual control handle, a touch screen, a tricolor alarm light, an emergency stop button, a voice broadcaster, an automatic charge interface, a clearance lamp, a switching button, a manual charge interface, a bottom obstacle avoidance laser radar, an in-place switch, or a fork tip safety sensor.

13. The forklift of claim 1, further comprising at least one of:
a fork tip safety sensor on a picking end of a fork arm of the forklift, wherein the fork tip safety sensor is configured to monitor an environment ahead of the fork arm;
an in-place switch at a bottom of a first side of the forklift body, wherein the in-place switch is configured to detect whether a pallet is in place when the fork arm picks up the pallet; and,
a bottom obstacle avoidance laser radar at a bottom of the forklift body.

14. A method for a forklift, applied to the forklift according to any one of the claims 1 to 13, and comprising:
when the forklift implements a positioning function, the forklift at least uses point cloud data scanned by the first 3D laser radar as determination basis; and/or,
when the forklift implements a stereoscopic protection function, the forklift at least uses point cloud data scanned by the second 3D laser radar as determination basis.

15. The method of claim 14, further comprising:
when the forklift implements the positioning function, the forklift uses the point cloud data scanned by the first 3D laser radar and the second 3D laser radar as determination basis.

16. The method of claim 15, wherein the forklift further comprises a third 3D laser radar mounted at a first side of the forklift body, and the method comprises:
when the forklift implements the positioning function, the forklift uses the point cloud data scanned by the first 3D laser radar, the second 3D laser radar and the third 3D laser radar as determination basis.

17. The method of claim 14, further comprising:
when the forklift implements the stereoscopic protection function, the forklift at least uses the point cloud data scanned by the first 3D laser radar and the second 3D laser radar as determination basis.

18. The method of claim 17, wherein the forklift further comprises a third 3D laser radar mounted at a first side of the forklift body, and the method comprises:
when the forklift implements the stereoscopic protection function, the forklift uses the point cloud data scanned by the first 3D laser radar, the second 3D laser radar and the third 3D laser radar as determination basis.

19. A method for a forklift, applied to the forklift according to any one of claims 1 to 13, and comprising:
the forklift travels along a direction ahead of a first side of the forklift for picking up goods, such that a fork arm at the first side of the forklift picks up a pallet;
the forklift obtains point cloud data by using a third 3D laser radar at the first side of the forklift body to determine a state of the fork arm, a state of the pallet and a state of goods on the pallet, and to provide feedback to adjust the forklift; and
the forklift runs away along a direction ahead of a second side of the forklift to, based on the point cloud data scanned by the first 3D laser radar, the second 3D laser radar and the third 3D laser radar, adjust a travel path of the forklift, wherein the first side is opposite to the second side.

20. The method of claim 19, wherein the forklift obtains the point cloud data by using the third 3D laser radar at the first side of the forklift body to determine the state of the fork arm, the state of the pallet and the state of the goods on the pallet, and to provide feedback to adjust the forklift, comprises:
determining, based on the point cloud data obtained by the third 3D laser radar, whether the fork arm is in place for the pallet;
when determining that an anomaly occurs to the pallet or the goods based on the point cloud data obtained by the third 3D laser radar, providing feedback and stopping the travel of the forklift, and adjusting a pose of the fork arm.
